# EUROPÄISCHE PATENTSCHRIFT

(11) **EP 0 606 339 B1**
(45) Veröffentlichungstag und Bekanntmachung des Hinweises auf die Patenterteilung: **08.11.1995**
(21) Anmeldenummer: 92920767.8
(22) Anmeldetag: 30.09.1992
(51) Int. Cl.: B60L 11/02

(54) **NICHT-SPURGEBUNDENES FAHRZEUG MIT ELEKTRODYNAMISCHEM WANDLER UND FAHRHEBEL**
NON-TRACKBOUND VEHICLE WITH AN ELECTRODYNAMIC CONVERTER AND A HAND THROTTLE
VEHICULE NON RELIE A DES RAILS POURVU D'UN TRANSDUCTEUR ELECTRODYNAMIQUE ET D'UNE MANETTE D'ACCELERATEUR

(30) Priorität: 04.10.1991 DE 4133014
(43) Veröffentlichungstag der Anmeldung: 20.07.1994
(73) Patentinhaber: MANNESMANN Aktiengesellschaft, 40027 Düsseldorf (DE)
(72) Erfinder: ADLER, Uwe, D-97422 Schweinfurt (DE); DREXL, Hans-Jürgen, D-97453 Schonungen/Mgb. (DE); LUTZ, Dieter, D-97422 Schweinfurt (DE); NAGLER, Franz, D-97503 Ottendorf (DE); OCHS, Martin, D-97422 Schweinfurt (DE); SCHIEBOLD, Stefan, D-97421 Schweinfurt (DE); SCHMIDT-BRÜCKEN, Hans-Joachim, D-97505 Geldersheim (DE); THIELER, Wolfgang, D-97437 Hassfurt (DE); WAGNER, Michael, D-97464 Niederwerrn (DE); WESTENDORF, Holger, D-97456 Hambach (DE); WYCHNANEK, Rainer, D-97532 Madenhausen (DE)
(74) Vertreter: Meissner, Peter E., Dipl.-Ing.
(86) Internationale Anmeldenummer: DE9200834
(87) Internationale Veröffentlichungsnummer: WO9307020

(56) Entgegenhaltungen:
- DD-A- 228 589
- DE-A- 2 943 554
- DE-A- 3 112 629
- DE-A- 3 714 151
- DE-A- 4 000 678
- US-A- 3 837 419
- US-A- 4 495 451

## Beschreibung

Die Erfindung betrifft ein nicht-spurgebundenes Fahrzeug, bei dem mindestens ein Rad für den Antrieb mit einem Elektromotor gekoppelt ist, welcher über einen Energieverteiler nach Maßgabe von seitens einer Steuereinheit erzeugten Steuersignalen mit Strom gespeist wird, der von einem an einen Verbrennungsmotor gekoppelten Generator geliefert wird, wobei die Steuereinheit von einen Fahrhebel ein Fahrsignal erhält, welches mindestens repräsentativ ist für die Fahrhebelstellung.

Nicht-spurgebundene Fahrzeuge sind insbesondere Personen- und Lastkraftwagen. Bislang werden diese Fahrzeuge üblicherweise mit Verbrennungsmotoren betrieben. Verbrennungsmotoren besitzen eine charakteristische Drehmoment/Drehzahl-Kennlinie, die bei einem bestimmten Drehzahlbereich ein mehr oder weniger stark ausgeprägtes Drehmoment-Maximum besitzt, an welches bei höheren und insbesondere bei niedrigeren Drehzahlen Bereiche mit stark verringertem Drehmoment anschließen.

Die Leistung eines Motors errechnet sich als Produkt aus Drehmoment und Drehzahl. Um ein Fahrzeug möglichst rasch zu beschleunigen, muß die maximal verfügbare Leistung auf die Antriebsräder übertragen werden. Arbeitet der Motor des Fahrzeugs in einem niedrigen Drehzahlbereich, so kann auch bei maximal geöffneter Drosselklappe nur eine relativ langsame Beschleunigung stattfinden, weil zu wenig Leistung verfügbar ist. Durch Schalten in einen niedrigeren Gang kann die Leistung zum Beschleunigen erhöht werden, da in einem niedrigeren Gang eine höhere Drehzahl und mithin ein höheres Leistungsangebot vorhanden ist. Praktisch sämtliche Fahrzeuge mit Verbrennungsmotor sind mit einem Schalt- oder Automatikgetriebe ausgestattet, um die verfügbare Leistung des Motors ausnutzen zu können.

Bei elektrischen Antrieben, die vornehmlich bei spurgebundenen Fahrzeugen eingesetzt werden, beispielsweise bei Loks, ergibt sich der Vorteil, daß die Abhängigkeit der Leistung von der Drehzahl wesentlich schwächer ausgeprägt ist als bei Verbrennungsmotoren. Deshalb kann bei elektrischen Antrieben ein Getriebe in aller Regel entfallen.

Es ist nun daran gedacht worden, auch nicht-spurgebundene Fahrzeuge, also insbesondere Personenkraftwagen, Lastkraftwagen und Busse, mittels eines oder mehrerer Elektromotoren anzutreiben, die direkt an die Räder gekoppelt sind. Gespeist werden die Elektromotoren von einer Verbrennungsmotor-Generator-Einheit über einen als Leistungselektronik ausgebildeten Energieverteiler. Ein derartiger Hybridmotor hat eine Reihe von Vorteilen. Neben dem Wegfall eines Schaltgetriebes oder Automatikgetriebes bietet sich beim Antrieb der Räder durch Elektromotoren auch die Möglichkeit, die Elektromotoren bei schiebendem Motor oder beim Bremsvorgang als Generatoren zu betreiben, um die dann entstehende elektrische Leistung z.B. für Heizzwecke oder dergleichen zu nutzen.

Es ist auch bereits vorgeschlagen worden, bei einem Fahrzeug einen Verbrennungsmotor mit einem als Schwungrad ausgebildeten Energiespeicher zu koppeln. Man kann dann nämlich den Verbrennungsmotor stets in einem optimalen Betriebszustand betreiben, z.B. in einem Bereich des günstigsten spezifischen Kraftstoffverbrauchs. Der mit dem Verbrennungsmotor gekoppelte Generator liefert elekfrische Energie an die Antriebs-Elektromotoren. Beim Beschleunigen des Fahrzeugs wird zusätzliche Energie aus dem Schwungrad entnommen. Beim Bremsvorgang wird von den dann als Generatoren arbeitenden Elektromotoren Energie gewonnen, die in dem Schwungrad als mechanische Energie gespeichert werden kann.

Die bisher gemachten Vorschläge, in einem Fahrzeug einen Verbrennungsmotor mit einem Generator und dazugehörigen Antriebs-Elektromotoren vorzusehen, sind jedoch nur zum Teil in der Praxis realisiert worden.

Aus der DE 40 00 678 A1 ist ein nicht-spurgebundenes Fahrzeug bekannt, das einen Verbrennungsmotor, einen von diesem angetriebenen elektrischen Generator, einen elektrisch ladbaren und entladbaren Schwungradspeicher, mindestens einen elektrischen Fahrmotor und einen von einer Steuereinheit geführten, als Leistungselektronik ausgebildeten Energieverteiler aufweist. Der elektrische Fahrmotor wird dabei von dem Energieverteiler mit elektrischem Strom aus dem Generator und/oder dem Schwungradspeicher gespeist. Die elektronische Steuereinheit läßt den Verbrennungsmotor je nach Ladezustand des Schwungradspeichers entweder mit einer Leerlaufdrehzahl (bei weitgehend geladenem Speicher) oder mit einer zweiten Drehzahl (bei weitgehend leerem Speicher) laufen, wobei die zweite Drehzahl eine nach Optimierungsgesichtspunkten (z.B. Kraftstoffverbrauch, Schadstoffemission) ausgewählte Größe darstellt.

Dieser Stand der Technik offenbart sämtliche Merkmale des Anspruches 1 mit Ausnahme der Merkmale, daß die Steuereinheit aus der Geschwindigkeit und/oder der Beschleunigung der Fahrhebelbetätigung ein Steuersignal für die Entnahme von Energie aus dem Energiespeicher erzeugt und der unter b) und c) aufgeführten Merkmale.

Im Hinblick auf Energieersparnis, Umweltschutz und weitere Erfordernisse ist das oben angesprochene Konzept eines Fahrzeugs mit elektrodynamischem Wandler vielversprechend. Problematisch ist beim Einsatz solcher Fahrzeuge möglicherweise die Umstellung der Fahrer von dem gewohnten Fahrzeug mit Verbrennungsmotor auf eine Fahrzeug mit quasi elektrischem Antrieb. Da der Antrieb letztlich mit Elektromotoren erfolgt, verhält sich das Fahrzeug nämlich sehr ähnlich einem Fahrzeug mit reinem elektrischen Antrieb.

Der Erfindung liegt die Aufgabe zugrunde, ein nicht-spurgebundenes Fahrzeug der eingangs geannten Art anzugeben, bei dem der durch Bewegen eines Fahrhebels, insbesonders Fahrpedals, geäußerte Fahrerwunsch richtig interpretiert wird und Maßnahmen getroffen werden, um den Fahrerwunsch umzusetzen in eine Leistungsbereitstellung, die ein dem Fahrerwunsch entsprechendes Fahrverhalten des Fahrzeugs gestattet.

Gelöst wird diese Aufgabe durch ein Fahrzeug mit den Merkmalen des Patentanspruchs 1. Ein solches Fahrzeug zeichnet sich dadurch aus, daß ein Energiespeicher vorgesehen ist, der über den Energieverteiler elektrisch mit dem Elektromotor und mit dem Generator verbunden ist, daß die Steuereinheit das Fahrsignal zu einem Steuersignal für den Verbrennungsmotor verarbeitet, um den Verbrennungsmotor auf die der Fahrhebelstellung entsprechende Leistung zu bringen oder auf dieser Leistung zu halten, und daß die Steuereinheit ferner ein Steuersignal für die Entnahme von Energie aus dem Energiespeicher erzeugt, um zumindest
a) den Verbrennungsmotor optimal in einen neuen Betriebspunkt beschleunigen zu lassen; und/oder
b) das Fahrzeug maximal zu beschleunigen und/oder
c) die Höchstgeschwindigkeit des Fahrzeugs bei voller Verbrennungsmotorleistung noch zu erhöhen.

Die Erfindung schlägt mithin vor, dem Fahrsignal, also insbesondere der jeweiligen Winkelstellung des Fahrhebels (Fahrpedals) eine bestimmte Antriebsleistung zuzuordnen, die grundsätzlich von dem Verbrennungsmotor zu erbringen ist. Mit dem Betätigen des Fahrpedals stellt der Fahrer eine gewisse Leistungsanforderung. Die Kennlinie zwischen angeforderter Leistung und Stellung des Fahrpedals ist vorzugsweise nicht-linear und verläuft im Anfangsbereich relativ flach, um bei langsamer Fahrt eine leichte Dosierung der Leistung zu ermöglichen.

Man sollte die durch die Stellung des Fahrpedals gewählte Leistung als Dauerleistung betrachten, die grundsätzlich von dem Verbrennungsmotor bereitzustellen ist. Der Energiespeicher ist in Verbindung mit der Steuereinheit zu dem Zweck vorgesehen, den Übergang zwischen einer gegebenen Fahrgeschwindigkeit und einer neuen Fahrgeschwindigkeit zu ermöglichen. Wenn das Fahrzeug bei einer gegebenen Anfangsgeschwindigkeit vₐ fährt, wird von den Antriebsquellen, also der VerbrennungsmotorGenerator-Einheit und dem Energiespeicher, eine hier als Anfangsleistung bezeichnete Leistung Pₐ geliefert, die bei konstanter Geschwindigkeit, im Gleichgewicht steht mit den auf das Fahrzeug einwirkenden Widerständen, insbesondere Luftwiderstand, Rollwiderstand der Reifen und dergleichen. Wird in diesem stationären Zustand des Fahrzeugs das Fahrpedal weiter durchgedrückt, so bedeutet dies eine erhöhte Leistungsanforderung. Bei Bereitstellung dieser erhöhten Leistung wird das Fahrzeug beschleunigt, solange, bis sich eine Endgeschwindigkeit vₑ einstellt, bei der die erhöhte Leistung Pe im Gleichgewicht steht mit den auf das Fahrzeug einwirkenden Widerständen.

Der Energiespeicher wird von der Steuereinheit in sehr spezieller Weise dazu eingesetzt, den Übergang von einer im stationären Fahrbetrieb erbrachten Ausgangsleistung Pₐ zu einer neuen Leistung Pₑ zu organisieren.

Gemäß der ersten Variante der Erfindung wird der Verbrennungsmotor "optimal" in einen neuen Betriebspunkt beschleunigt. Ein Verbrennungsmotor besitzt ein Kennlinienfeld, insbesondere läßt sich im Drehzahl/Drehmoment-Kennlinienfeld eine Linie eines günstigsten spezifischen Kraftstoffverbrauchs angeben. Wenn man nun davon ausgeht, daß der Verbrennungsmotor bei einer relativ niedrigen Drehzahl läuft und eine erhöhte Leistungsanforderung seitens des Fahrers gestellt wird, indem der Fahrer das Fahrpedal weiter durchdrückt, so muß - da hier die neu vorgewählte Leistung als Dauerleistung interpretiert wird, die von dem Verbrennungsmotor aufzubringen ist - der Motor auf eine höhere Drehzahl gebracht werden. Bei vergrößerter Drosselklappenöffnung und ansonsten unveränderter Belastung des Motors erhöht sich die Drehzahl bekanntlich nur sehr langsam, abhängig von der Last am Motor. Die Erfindung schafft die Möglichkeit, die Erhöhung der Drehzahl von einem Betriebspunkt, der auf der oben erwähnten Linie des günstigsten spezifischen Kraftstoffverbrauchs liegt, zu einem ebenfalls auf dieser Linie liegenden zweiten Betriebspunkt derart vorzunehmen, daß sehr wenig Kraftstoff verbraucht wird. Hierzu erfolgt eine kontinuierliche oder schrittweise Erhöhung der Drehzahl bei entsprechender Einstellung des Drehmoments bzw. der Leistung. Hierzu kann der Generator elektrisch ganz oder teilweise von dem Elektromotor entkoppelt werden, so daß der Generator praktisch vollständig oder teilweise im Leerlauf arbeitet. Damit läßt sich die Drehzahl des Verbrennungsmotors bei verringerter Last des Generators ziemlich schnell erhöhen, und zwar ist eine Erhöhung in der Nähe der erwähnten Linie des günstigsten spezifischen Kraftstoffverbrauchs möglich.

Alternativ kann man auch den Verbrennungsmotor bei leerlaufendem Generator rasch auf den gewünschten Drehzahlwert hochfahren, um dann allmählich den Generator wieder mit dem Elektromotor zu koppeln, und zwar so langsam, daß die Drehzahl nicht wieder absinkt. In der Zwischenzeit erfolgt der Antrieb des Elektromotors mit Speisung aus dem Energiespeicher. Damit ergibt sich ein ruckfreier Übergang zwischen Speisung aus Verbrennungsmotor/Generator und Speisung aus Energiespeicher.

Neben einer "optimalen" Beschleunigung des Verbrennungsmotors kann die Steuerung der Energieentnahme aus dem Energiespeicher auch so erfolgen, daß das Fahrzeug maximal beschleunigt wird. Hierbei muß darauf geachtet werden, daß die Beschleunigung abgestimmt ist auf die im Energiespeicher insgesamt gespeicherter Ladungsmenge, damit sich der Speicher nicht während des Beschleunigungsvorgangs erschöpft, was zu gefährlichen Situationen im Verkehr führen könnte.

Eine gewisse Ähnlichkeit mit der maximalen Beschleunigung des Fahrzeugs hat die Maßnahme, die Höchstgeschwindigkeit des Fahrzeugs, die an sich durch die maximale Leistung des Verbrennungsmotors gegeben ist, noch weiter zu erhöhen, indem bei maximaler Verbrennungsmotor-Leistung noch zusätzliche Leistung aus dem Energiespeicher entnommen und auf den Elektromotor gegeben wird.

Um gefährliche Situationen zu vermeiden, sind Warneinrichtungen vorgesehen, die den Fahrer informieren, wenn die in dem Energiespeicher vorhandene Energie bis auf einen Restbetrag abgesunken ist.

Die oben angesprochenen Maßnahmen, um den Energiespeicher in gewissen Situationen optimal auszunutzen, stehen in Zusammenhang mit speziellen Fahrsignalen, die weiter unten noch näher erläutert werden. Unabhängig von diesen Fahrsignalen kann erfindungsgemäß Energie aus dem Energiespeicher in den Elektromotor eingespeist werden, um zur etwa geschwindigkeitskonstanten Überwindung von Steigungen bei unveränderter Verbrennungsmotor-Drehzahl Zusstzenergie zur Verfügung zu stellen und/oder in stationären Betriebszuständen einen Teil der Verbrennungsmotor- Leistung durch Speicherenergieentnahme zu ersetzen, und/oder einen Fahrbetrieb bei abgeschaltetem Verbrennungsmotor zu ermöglichen. Insbesondere die letztgenannte Variante ist für den Stadtverkehr und für den sogenannten "Stop and Go"-Verkehr bei Staus interessant, da bei relativ geringem Kraftstoffverbrauch ein Höchstmaß an Schadstoffvermeidung erzielbar ist. Vorzugsweise ist am Fahrzeug ein Wählschalter vorgesehen, bei dessen Betätigung der Verbrennungsmotor abgeschaltet wird, vozausgesetzt, es ist in dem Energiespeicher genügend Energie für den reinen Speicherbetrieb vorhanden.

Der erfindungsgemäße Energiespeicher kann grundsätzlich auch ein mechanischer Speicher, z.B. ein Schwungrad, sein, bevorzugt wird hier jedoch ein Akkumulator zum Speichern elektrischer Energie.

Die oben näher erläuterten vorgaben, wie beispielsweise möglichst schnelle Beschleunigung des Verbrennungsmotors, geringer Kraftstoffverbrauch, geringe Schadstoffemission und dergleichen, können gleichzeitig berücksichtigt werden, wobei zweckmäßigerweise eine Gewichtung der einzelnen Parameter erfolgt.

Wie oben angedeutet, ist vorgesehen, daß zur optimalen Beschleunigung des Verbrennungsmotors der Generator elektrisch ganz oder teilweise von dem Elektromotor entkoppelt wird und der Verbrennungsmotor bei Erreichen des neuen Betriebspunkts zusammen mit dem Generator allmählich wieder an den Elektromotor gekoppelt wird, und daß während der Entkopplungsphase Energie derart aus dem Energiespeicher in den Elektromotor eingespeist wird, daß die Übergänge beim Koppeln ruckfrei erfolgen.

Wie eingangs erwähnt, spielt das Fahrsignal bei der Art des Einsatzes des Energiespeichers durch die Steuerung eine besondere Rolle. Im einfachsten Fall gibt ein am Fahrhebel, d.h. insbesondere ein am Fahrpedal befindlicher Stellungssensor, an die Steuereinheit ein Stellungssignal a. Aus dem zeitlichen Verlauf dieses Stellungssignals a kann dann die Steuerung durch Differenzieren ein Geschwindigkeitssignal und ein Beschleunigungssignal a für die Fahrpedalbewegung ermitteln. Das Geschwindigkeits- und das Beschleunigungssignal für das Fahrpedal können auch direkt von entsprechenden Sensoren am Fahrpedal geliefert werden.

Zusätzlich zu den oben erwähnten Fahrsignalen, die von der Betätigung des Fahrpedals abhängen, sind noch ein Geber für eine Maximalbeschleunigungs-Anforderung (Kickdown) und gegebenenfalls noch ein Wahlschalter für den intermittierenden Betrieb (Stadtverkehr) vorhanden.

Der Energiespeicher ist mit einem Ladezustands-Sensor ausgestattet, der an die Speichereinheit ein Signal gibt, welches kennzeichnend ist für die in dem Energiespeicher noch enthaltene Energie. Aus diesen Werten sowie aus weiteren vorab gespeicherten Werten kann die Steuereinheit ermitteln, wieviel Energie pro Zeiteinheit (Leistung) dem Energiespeicher entnommen werden darf, damit die Beschleunigung zu der gewünschten neuen Fahrzeug-Endgeschwindigkeit führt, ohne daß sich beim Beschleunigungsvorgang der Energiespeicher erschöpft und aufgrund der dann nachlassenden Beschleunigung gefährliche Situationen entstehen können.

Eine Zuschaltung von zusätzlicher Leistung aus dem Energiespeicher gestattet - bei maximaler Verbrennungsmotor-Leistung - eine weitere Erhöhung der Höchstgeschwindigkeit, wie sie durch die maximale Leistung des Verbrennungsmotors gegeben ist. Um diesen zusätzlichen Schub durch zusätzliche Leistung aus dem Energiespeicher zu erhalten, ist der letzte Bereich des Fahrhebel-Weges vorgesehen. Nur wenn das Fahrpedal vollständig durchgedrückt wird, werden Verbrennungsmotor und Energiespeicher beide zum Fahrzeugantrieb eingesetzt.

Wie aus den obigen Erläuterungen hervorgeht, erfolgt eine Energieentnahme aus dem Speicher einerseits ohne bewußtes Zutun des Fahrers lediglich durch entsprechenden Betrieb der Steuereinrichtung, die außer dem Fahrsignal noch Zustandssignale von dem Verbrennungsmotor, dem Generator, dem Speicher und dem Antriebs-Elektromotor enthält, so daß an der Steuereinheit permanent Signale über Drehzahl und Drehmoment des Verbrennungsmotors bzw. des Generators, über den Ladezustand des Speichers und über die Drehzahlen der Elektromotoren anstehen. Andererseits kann der Fahrer aber auch aktiv für eine Energieentnahme aus dem Speicher sorgen, indem er z.B. mit Hilfe des oben erwähnten Wählschalters im Stadtverkehr einen Antrieb auch bei stillstehendem Verbrennungsmotor wählt.

Vorteilhaft kann die Erfindung auch bei einem Fahrzeug angewendet werden, welches mit einer Einrichtung zur automatischen Geschwindigkeitsregelung ausgestattet ist. Jede Abweichung der Ist-Fahrzeuggeschwindigkeit von der eingestellten Soll-Fahrzeuggeschwindigkeit um mehr als einen vorbestimmten Wert kann Speicherenergie zur Konstanthaltung der Geschwindigkeit genutzt werden.

Die oben erwähnte Möglichkeit, im Stadtverkehr mittels Wählschalter auf quasi rein elektrischen Fahrzeugbetrieb umzuschalten, kann auch mit einer durch die Steuereinheit durchgeführten Lernfunktion verknüpft sein. Innerhalb eines bestimmten Zeitfensters zählt die Steuereinheit dann die Häufigkeit von Brems- und Beschleunigungsvorgängen. Übersteigt die mittlere Häufigkeit einen Schwellenwert, so wird automatisch auf "Stadtfahrt" umgeschaltet, d.h. auf einen quasi rein elektromotorischen Antrieb, wobei der Speicher abhängig von seinem Ladezustand nur hin und wieder durch Einschalten des Verbrennungsmotors aufgeladen wird.

Die naturgemäß begrenzte Kapazität des Energiespeichers birgt eine gewisse Problematik in sich. Soll das Fahrzeug bei Überholvorgängen sehr stark beschleunigt werden, und wird dazu Energie aus dem Energiespeicher abgezogen, so muß gewährleistet sein, daß die Speicherenergie für den gesamten Überholvorgang ausreicht. Der Energiebedarf für einen Überholvorgang hängt ab von der geforderten Beschleunigung des Fahrzeugs, der Masse des Fahrzeugs, dem Straßenverlauf (Steigung) und weiteren Einflußgrößen. Selbstverständlich gibt es gewisse Leistungsgrenzen, die der Fahrer - wie bei üblichen Fahrzeugen mit Verbrennungsmotoren auch - berücksichtigen muß, um nicht ein hinsichtlich der Fahrzeugleistung unmögliches Überholmanöver zu beginnen.

Es kann nun allerdings bei den hier in Rede stehenden Fahrzeugen vorkommen, daß der Energiespeicher durch eine gerade erfolgte starke Energieabnahme ziemlich stark entladen ist. In diesem Fall ist eine maximale Beschleunigung des Fahrzeugs für einen Überholvorgang unter Umständen nicht möglich. Deshalb ist eine Signalisiervorrichtung für den Ladezustand des Energiespeichers vorgesehen. Diese Signalisiervorrichtung kann optisch oder akustisch ausgebildet sein, vorzugsweise ist sie jedoch taktil ausgebildet, insbesondere als Widerstand im Fahrpepdal realisiert. Bei einem unzureichenden Ladezustand des Energiespeichers spürt der Fahrer beim Betätigen des Gaspedals einen ungewöhnlich hohen Widerstand. Dies signalisiert ihm, daß nicht genügend Speicherenergie für maximale Fahrzeugbeschleunigung vorhanden ist. Zusätzlich kann der Fahrer durch ein optisches oder akustisches Signal alarmiert werden, dessen Intensität vom Entladungszustand des Energiespeichers abhängt.

Im folgenden wird ein Ausführungsbeispiel der Erfindung anhand der Zeichnung naher erläutert. Es zeigen:
Fig. 1 - eine schematische Ansicht wesentlicher Elemente eines mit einem elektrodynamischen Wandler und einem Akkumulator als Energiespeicher ausgestatteten Personenkraftwagen,
Fig. 2 - ein Kennlinienfeld eines Verbrennungsmotors,
Fig. 3 - eine Leistungs/Fahrpedalstellungs-Kennlinie, und
Fig. 4 - eine Leistungs/Geschwindigkeits-Kennlinie mit der Geschwindigkeit des Fahrpedals als Parameter.

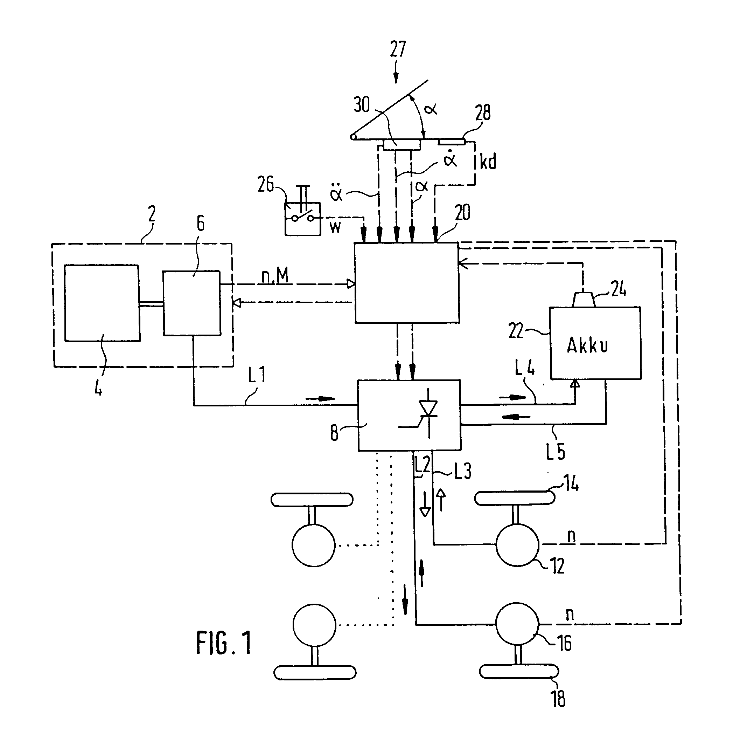

Fig. 1 zeigt schematisch wesentliche Antriebselemente eines Personenkraftwagens. Eine aus einem Verbrennungsmotor 4 und einem elektrischen Generator 6 bestehende Verbrennungsmotor-Generator-Einheit (im folgenden: VGE) 2 liefert über eine Leitung L1 elektrische Leistung an einen als Leistungselektronik ausgebildeten Energieverteiler 8, der über Leitungen L2 und L3 zwei Elektromotoren 12 und 16 speist, die direkt an die Hinterräder 14 und 18 gekoppelt sind. Dadurch werden die Hinterräder 14 und 18 abhängig von dem vom Energieverteiler 8 an die Elektromotoren 12 und 16 gelieferten Strom angetrieben.

Das Fahrzeug 10 kann auch mit einem Allradantrieb ausgestattet sein, wie links unten in Fig. 1 durch gestrichelte Leitungen angedeutet ist, die zu weiteren Elektromotoren fuhren, die mit den übrigen Rädern des Fahrzeugs gekoppelt sind.

Der den Elektromotoren 12 und 16 über den Energieverteiler 8 zugeführte Strom wird gesteuert von einer Steuereinheit 20, die einen Mikroprozessor und Speichereinrichtungen umfaßt. In der Speichereinrichtung sind Steuerprogramme, Kennlinien und dergleichen gespeichert.

Neben der VGE 2 ist als weitere Energiequelle ein hier als Akkumulator 22 ausgebildeter Energiespeicher 23 vorgesehen, der über Leitungen L4 und L5 mit dem Energieverteiler 8 gekoppelt ist. Über die Leitungen L4 und L5 wird elektrische Energie in den Akkumulator 22 eingespeichert bzw. elektrische Energie von dem Akkumulator 22 an den Energieverteiler 8 gegeben.

Dem Akkumulator 22 ist ein Sensor 24 zugeordnet, der ein für den Ladezustand des Akkumulators 22 repräsentatives Signal an die Steuereinheit 20 gibt. Die Steuereinheit 20 empfängt außerdem Drehzahl-Signale n von den beiden Elektromotoren 12 und 16, ferner ein Drehzahl-Signal n und ein Drehmoment-Signal M von der VGE 2; weiterhin Fahrsignale von einem Fahrpedal 27.

Das Fahrpedal 27 ist mit einer Sensoranordnung 30 ausgestattet, die an die Steuereinheit 20 ein für die Winkelstellung a des Fahrpedals 27 repräsentatives Stellungssignal a, ein Geschwindigkeitssignal a, und ein Beschleunigungssignal an die Steuereinheit 20 gibt. Die Signale a, und sind jeweils repräsentativ für die jeweilige Stellung des Fahrpedals 27, für dessen Betätigungsgeschwindigkeit bzw. für dessen Beschleunigung.

Außerdem ist mit dem Fahrpedal 27 ein Sensor 28 gekoppelt, der an die Steuereinheit 20 ein "Kickdown"-Signal kd liefert. Weiterhin kann der Fahrer über einen Wählschalter 26 ein Signal w an die Steuereinheit 20 geben, wodurch der Steuereinheit 20 der Fahrerwunsch signalisiert wird, daß das Einspeisen des Stroms in die Elektromotoren 12 und 16 ausschließlich vom Akkumulator erfolgen soll (Stadtfahrt).

Aus den in die Steuereinheit 20 eingegebenen Signalen berechnet die Steuereinheit 20 Steuersignale für die VGE 2 (insbesondere den Verbrennungsmotor) einerseits und den Energieverteiler 8 andererseits. Wenn der Fahrer das Fahrpedal 27 mit einer bestimmten Geschwindigkeit aus einer ersten Stellung in eine zweite Stellung herabdrückt, wird dies von der Steuereinheit 20 als Anforderung einer höheren Dauerleistung seitens der VGE 2 interpretiert, so daß die Steuereinheit 20 an die VGE 2 Steuersignale liefert, um den Verbrennungsmotor in einen Betriebspunkt hochzufahren, welcher der angeforderten Dauerleistung entspricht.

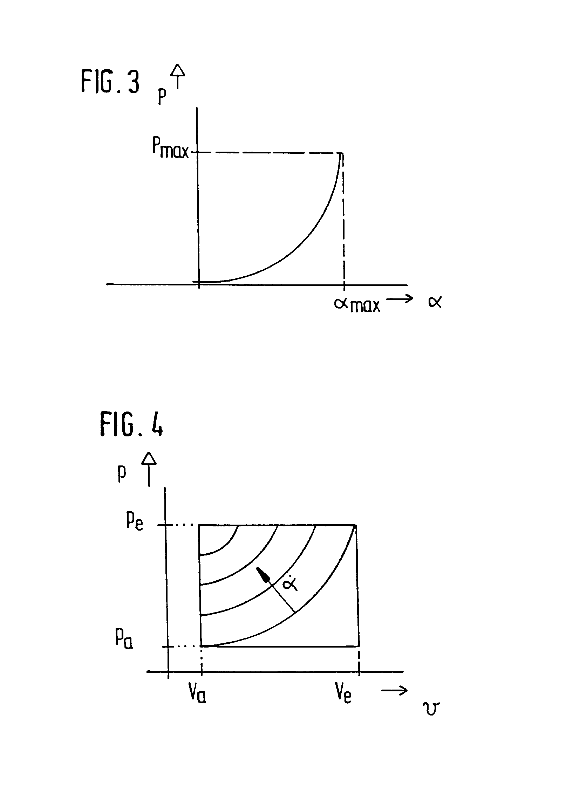

Das Verhältnis zwischen Fahrpedalstellung und angeforderter Leistung ist nicht-linear, wie es z.B. in Fig. 3 dargestellt ist. Bei kleinen Fahrpedalwegen a ändert sich die angeforderte Leistung nur geringfügig. Dies ermöglicht eine leichte Dosierung der Leistungsanforderung bei niedrigen Geschwindigkeiten.

Das oben erwähnte Herabdrücken des Fahrpedals 27 um einen bestimmten Betrag in eine neue Fahrpedalstellung a mit einer bestimmten Betätigungsgeschwindigkeit bestimmt die Art der Fahrzeugbeschleunigung, wie in Fig. 4 im Prinzip dargestellt ist. Der angeforderten erhöhten Leistung entspricht eine erhöhte neue konstante Geschwindigkeit vₑ des Fahrzeugs. Um diese Geschwindigkeit ausgehend von der früheren konstanten" Geschwindigkeit vₐ zu erreichen, wobei dann der Verbrennungsmotor nach Erreichen der Geschwindigkeit vₑ die gesamte Leistung liefert, wird zunächst sofort seitens des Energiespeichers 22 eine zusätzliche Leistung bereitgestellt, die mindestens so groß ist wie die frühere Leistung des Verbrennungsmotors (Pₐ). Dann wird die Drehzahl des Verbrennungsmotors hochgefahren bis zu einem Wert, der der angestrebten Leistung Pₑ entspricht. Das Beschleunigen des Fahrzeugs mit Hilfe der gespeicherten Energie erfolgt nach Maßgabe der Betätigungsgeschwindigkeit des Fahrpedals 27, wie in Fig. 4 skizziert ist. Je schneller das Fahrpedal 27 betätigt wurde, umso mehr Energie wird zur Fahrzeugbeschleunigung bereitgestellt.

Bei dem hier bevorzugten Ausführungsbeispiel erfolgt während des Hochfahrens des Verbrennungsmotors auf einen neuen Betriebspunkt eine Entkopplung zwischen dem Generator 6 und den Antriebs-Elektromotoren 12 und 16.

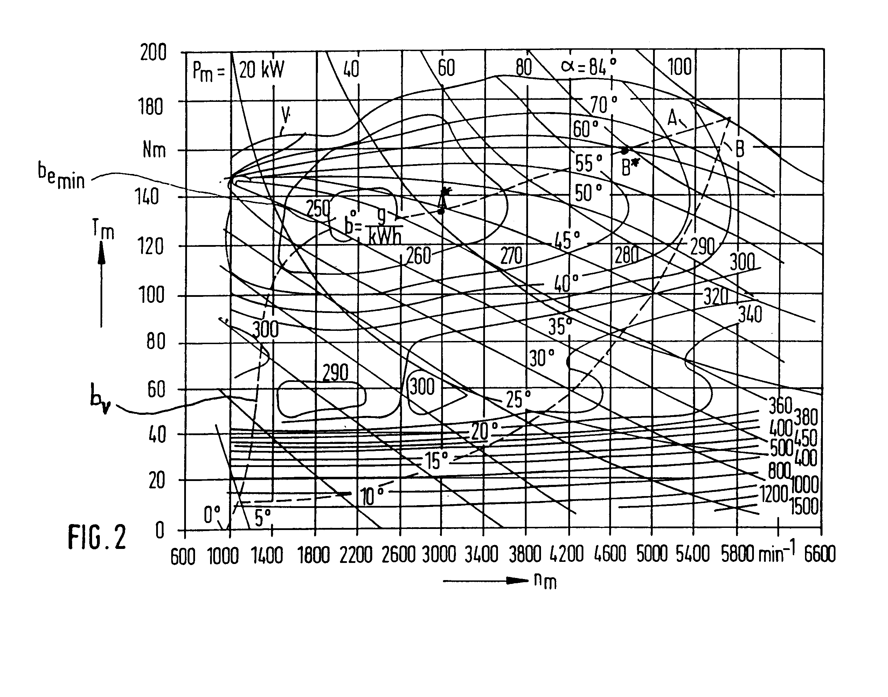

Fig. 2 zeigt ein Kennliniendiagramm eines 100- kW-Verbrennungsmotors. Über der Drehzahl ist das Drehmoment aufgetragen; es ergibt sich eine gestrichelte Linie by für den günstigsten spezifischen Kraftstoffverbrauch in Abhängigheit der Drehzahl. Bei der Drehzahl von n = 2200 etwa ergibt sich ein Punkt bₑₘin, mit dem günstigsten Kraftstoffverbrauch überhaupt. Bei niedrigeren Drehzahlen ist der Kraftstoffverbrauch zwar geringer, aber dafür ist das Drehmoment unverhältnismäßig kleiner. Bei höheren Drehzahlen ergibt sich ein erhöhter Kraftstoffverbrauch bei nur unterproportionaler Drehmomentzunahme.

Gemäß dem obigen Beispiel sei angenommen, daß bei einer Fahrzeuggeschwindigkeit vₐ, während die Leistung vollständig vom Verbrennungsmotor 4 aufgebracht wird, der Verbrennungsmotor 4 bei einer Drehzahl von 3000 UpM arbeitet, was in Fig. 2 dem Betriebspunkt A^{*} auf der Linie by entspricht. Drückt der Fahrer das Fahrpedal 27 weiter durch, was einer angeforderten Dauerleistung von Pₑ entspricht, so muß der Verbrennungsmotor 4 bis zu einem neuen Betriebspunkt B^{*} der Linie by hochgefahren werden.

Dieses Hochfahren des Verbrennungsmotors 4 geschieht vorzugsweise bei entlastetem Generator 6. Hierzu wird der Energieverteiler 8 derart angesteuert, daß die zum Vorwärtsbewegen des Fahrzeugs gespeisten Elektromotoren 12 und 8 nicht mehr vollständig vom Generator 6, sondern ganz oder teilweise aus dem Energiespeicher 2 gespeist werden. In diesem Zustand wird der Verbrennungsmotor 4 entlang der Linie by bis zum neuen Betriebspunkt B^{*} hochgefahren. Dann erfolgt wieder eine allmähliche Anschaltung des Generators 6 an die Elektromotoren 12 und 16. Diese Kopplungsvorgänge werden von der Steuereinheit 20 so gesteuert, daß sie allmählich vonstatten gehen und so der Antrieb ruckfrei fortgesetzt wird.

Bei dem oben anhand der Fig. 2 erläuterten Beispiel erfolgt der Einsatz des Energiespeichers 22 zur Beschleunigung des Fahrzeugs unter Berücksichtigung eines günstigen Kraftstoffverbrauchs. Alternativ oder zusätzlich können auch andere Parameter berücksichtigt werden, so z.B. die Schadstoffemission, die Geräuschentwicklung, die Aggregatbeanspruchung und dergleichen.

Wenn das Fahrzeug mit einer gewissen konstanten Geschwindigkeit fährt und der Fahrer eine maximale Beschleunigung wünscht, tritt er das Fahrpedal 27 vollständig durch. Hierdurch erzeugt der Sensor 28 das "Kickdown"-Signal kd. Demzufolge wird den Elektromotoren 12 und 16 die maximal verfügbare Leistung zugeführt: Zum einen wird der Verbrennungsmotor 4 bis zu seiner Höchstleistung hochgefahren, zum anderen wird dem Energiespeicher 22 eine gewisse Maximalleistung entnommen. Hierbei kann man - wie oben beschrieben - zunächst dem Energiespeicher 22 eine sehr hohe Leistung entnehmen, die höher ist als die Maximalleistung des Verbrennungsmotors 4. Wenn der Verbrennungsmotor 4 dann in einem Bereich höchster Leistung arbeitet, kann der Anteil der dem Energiespeicher 22 entnommenen Leistung abgesenkt werden, so daß aber immer noch den Elektromotoren 12 und 16 eine Leistung zugeführt wird, die größer ist als die von dem Verbrennungsmotor 4 erbrachte maximale Leistung.

Der oben erläuterte Vorgang dient zur extrem starken Beschleunigung des Fahrzeugs (Kick- down). Fährt das Fahrzeug bereits mit einer Höchstgeschwindigkeit, welche der Maximalleistung des Verbrennungsmotors 4 entspricht, so kann auch dann noch durch einen "Kickdown" zusätzlicher Schub erreicht werden, indem die Steuereinheit 20 Energie aus dem Energiespeicher 22 entnimmt und den Elektromotoren 12 und 16 zuführt. Hierdurch erhöht sich die Nenn-Höchstgeschwindigkeit noch um einen gewissen Betrag.

In der Zeichnung nicht im einzelnen dargestellt sind Mittel, mit denen dem Fahrer der Ladezustand des Akkumulators 22 signalisiert wird. Dieses Signalisieren des Ladezustands erfolgt nicht in der Mitteilung von Zahlenwerten, sondern in Form akustischer, optischer oder taktiler Signale. Zu bevorzugen ist eine mit dem Fahrpedal 27 gekoppelte Dämpfungseinrichtung, z.B. eine verstellbare Vorspannfeder, die, wenn ein bestimmter unterer Schwellenwert des Ladezustands des Energiespeichers 22 unterschritten wird, den Betätigungswiderstand des Fahrpedals 27 spürbar erhöht. Hierdurch wird dem Fahrer signalisiert, daß der Energiespeicher 22 momentan nur wenig Energie speichert, so daß keine erhöhten Beschleunigungen erreicht werden können.

Im Stadtverkehr kann der Fahrer durch Betätigen des Schalters 26 ein Signal w erzeugen, welches der Steuereinheit 20 signalisiert, daß der Verbrennungsmotor 4 abgeschaltet wird. Dies erfolgt unter der Voraussetzung, daß genug Energie im Akkumulator 22 gespeichert ist. Dieser Betriebszustand ist für einen Stop-and-Go-Verkehr geeignet.

Alternativ zu dem Wählschalter 26 kann die Steuereinheit 20 das Umschalten auf "Stadtfahrt" auch automatisch vornehmen. Hierzu zählt die Steuereinheit 20 in einem Zeitfenster die Häufigkeit von Beschleunigungs- und Bremsvorgängen (anhand der von den Elektromotoren 12 und 16 gelieferten Drehzahlsignale n). Übersteigt die mittlere Häufigkeit der Brems- und Beschleunigungsvorgänge einen Schwellenwert, so schaltet die Steuereinheit 20 automatisch auf einen Betrieb um, bei dem der Verbrennungsmotor 4 nur eingeschaltet wird, um den Akkumulator 22 wieder aufzuladen. Der Antrieb erfolgt im Prinzip ausschließlich mit Leistung aus dem Akkumulator 22. Dieser wird nicht nur durch den Verbrennungsmotor aufgeladen, sondern auch durch Strom, der beim Bremsen oder bei schiebendem Betrieb des Fahrzeugs von den dann generatorisch arbeitenden Elektromotoren 12 und 16 erzeugt wird.

Das Beschleunigungssignal a, welches die Beschleunigung des Fahrpedals 27 angibt, kann von der Steuereinheit 20 ebenfalls ausgewertet werden zur Unterscheidung der Art und Weise, in der der Fahrer eine Änderung der Fahrzeuggeschwindigkeit vorzunehmen wünscht. Ebenso wie das Geschwindigkeitssignal kann auch das Beschleunigungssignal a durch Differentiation anhand des von der Steuereinheit 20 zeitlich erfaßten Signals der Fahrpedalstellung a errechnet werden, wenn hierzu keine speziellen Sensoren vorgesehen sind. In Kombination mit dem Maximalwert des Fahrpedalwinkels a kann die Steuereinheit 20 bei Überschreiten eines vorgegebenen Grenzwertes für die Geschwindigkeit oder die Beschleunigung der Fahrpedalbetätigung erkennen, daß ein "Kick- down"-Signal vorliegt. In diesem Fall erübrigt sich die Installation eines speziellen Sensors 28.

## Patentansprüche

1. Nicht-spurgebundenes Fahrzeug, bei dem mindestens ein Rad (14, 18) für den Antrieb mit einem Elektromotor (12, 16) gekoppelt ist, welcher über einen Energieverteiler (8) nach Maßgabe von seitens einer Steuereinheit (20) erzeugten Steuersignalen mit Strom gespeist wird, der von einem an einen Verbrennungsmotor (4) gekoppelten Generator (6) geliefert wird, wobei die Steuereinheit (20) von einem Fahrhebel (27) ein Fahrsignal (a,a,a...) erhält, welches repräsentativ ist für die Fahrhebel- Stellung (a) sowie mindestens für die Geschwindigkeit (a) und/oder die Beschleunigung (a), mit der der Fahrhebel (27) bewegt wird, wobei ferner ein Energiespeicher (22) vorgesehen ist, der über den Energieverteiler (8) elektrisch mit dem Elektromotor (12, 16, und mit dem Generator (6) verbunden ist, und die Steuereinheit (20) das Fahrsignal (a,a,a....) zu einem Steuersignal für den Verbrennungsmotor (4) verarbeitet, um den Verbrennungsmotor auf die der Fahrhebel-Stellung (a) entsprechende Leistung zu bringen oder auf dieser Leistung zu halten, und wobei die Steuereinneit (20) ferner aus der Geschwindigkeit (a) und/oder der Beschleunigung (a) der Fahrhebelbetätigung ein Steuersignal für die Entnahme von Energie aus dem Energiespeicher (22) erzeugt, um
a) den Verbrennungsmotor (4) optimal in einen neuen Betriebspunkt (B^{*}) beschleunigen zu lassen oder
b) das Fahrzeug maximal zu beschleunigen oder
c) die Höchstgeschwindigkeit des Fahrzeugs bei voller Verbrennungsmotor-Leistung noch zu erhöhen.

2. Fahrzeug nach Anspruch 1,
dadurch gekennzeichnet, daß die Steuereinheit (20) unabhängig vom Fahrsignal (a,a...) Energie aus dem Energiespeicher (22) in den Elektromotor (12, 16) einspeist, um

d) zur etwa geschwindigkeitskonstanten überwindung von Steigungen bei unveränderter Verbrennungsmotor-Drehzahl Zusatzenergie zur Verfügung zu stellen und/oder
e) in stationären Betriebszuständen einen Teil der Verbrennungsmotor-Leistung durch Speicherenergieentnahme zu ersetzen und/oder
f) einen Fahrbetrieb bei abgeschaltetem Verbrennungsmotor (4) zu ermöglichen.

3. Fahrzeug nach Anspruch 1 oder 2,
dadurch gekennzeichnet, daß das optimale Beschleunigen des Verbrennungsmotors (4) in einen neuen Betriebspunkt unter Berücksichtigung mindestens einer der Vorgaben erfolgt, nämlich
- möglichst schnell,
- bei günstigstem spezifischen Kraftstoffverbrauch,
- bei möglichst geringer Schadstoffemission,
- möglichst geräuscharm, wobei im Falle der gleichzeitigen Berücksichtigung mehrerer Vorgaben diese gewichtet werden.

4. Fahrzeug nach einem der Ansprüche 1 bis 3 ,
dadurch gekennzeichnet, daß zur optimalen Beschleunigung des Verbrennungsmotors dar Generator vorübergehend elektrisch ganz oder teilweise von dem Elektromotor (12, 16) entkoppelt wird und der Verbrennungsmotor (4) bei Erreichen des neuen Betriebspunkts (B^{*}) zusammen mit dem Generator (6) allmählich wieder an den Elektrommotor (12, 16) gekoppelt wird, und daß während der Entkopplungsphase Energie derart aus dem Energiespeicher (22) in den Elektrommotor (12, 16) eingespeist wird, daß die übergänge beim Koppeln ruckfrei erfolgen.

5. Fahrzeug nach einem der Ansprüche 1 bis 4 ,
dadurch gekennzeichnet, daß das Fahrsignal ferner repräsentativ ist für eine Anforderung eines Fahrbetriebs mit ausschließlicher Speisung aus dem Energiespeicher (22), wobei letzterer intermittierend durch Anschalten des Verbrennungsmotors und gegebenenfalls zusätzlich durch die beim Verzögern oder Bremsen des Fahrzeugs von dem dann generatorisch arbeitenden Elektromotor (12, 16) erzeugte elektrische Leistung aufgeladen wird.

6. Fahrzeug nach einem der Ansprüche 1 bis 5,
dadurch gekennzeichnet, daß zur Erzielung einer maximalen Fahrzeugbeschleunigung Leistung aus dem Energiespeicher (22) parallel zu vom Verbrennungsmotor/Generator (2) gelieferter Leistung in einem solchen Maß in den Elektromotor (12, 16) eingespeist wird, daß die Speicherenergie ausreicht, um die durch eine neue Fahrhebel-Stellung (a) gewählte Dauerleistung zu erreichen.

7. Fahrzeug nach einem der Ansprüche 1 bis 6,
dadurch gekennzeichnet, daß im letzten Bereich des Fahrhebelweges dem Energiespeicher (22) zeitlich begrenzt Energie zur Erhöhung der durch den Verbrennungsmotor (4) allein erreichbaren Höchstgeschwindigkeit entnommen wird.

8. Fahrzeug nach einem der Ansprüche 1 bis 7, gekennzeichnet durch eine Signalisiereinrichtung für den Ladezustand des Energiespeichers (22).

9. Fahrzeug nach Anspruch 8,
dadurch gekennzeichnet, daß die Signalisierungseinrichtung taktil arbeitet, insbesondere als verstellbare Vorspannfeder, die den Betätigungswiderstand des Fahrhebels (27) erhöht, ausgebildet ist.

10. Fahrzeug nach einem der Ansprüche 1 bis 9 ,
dadurch gekennzeichnet, daß ein "Kick-down"-Signal von der Steuereinheit (20) anhand des gleichzeitigen Vorliegens des Maximalwertes der Fahrpedalstellung (a) und des Uberschreitens eines vorgegebenen Grenzwertes für die Geschwindigkeit (a) oder die Beschleunigung (a) der Fahrpedalbetätigung erkannt wird.

## Claims

1. A non-railborne vehicle, in which at least one wheel (14, 18) is coupled for drive to an electric motor (12, 16), which is supplied with current via an energy distributor (8) according to control signals generated on the part of a control unit (20), said current being supplied by a generator (6) coupled to a combustion engine (4), the control unit (20) receiving a drive signal (α,,..) from a throttle (27), which signal (α,,...) is representative of the throttle position (a) and at least the speed (a) and/or the acceleration (a), at which the throttle (27) is being moved, an energy store (22) additionally being provided which is connected via the energy distributor (8) electrically with the electric motor (12, 16) and the generator (6), and the control unit (20) processes the drive signal (a,ä,ä...) into a control signal for the combustion engine (4), to bring the combustion engine to the power corresponding to the throttle position (a) or keep it at that power, the control unit (20) additionally generating a control signal, from the speed (a) and/or the acceleration (a) of throttle actuation, for withdrawal of energy from the energy store (22), in order
a) to cause optimum acceleration of the combustion engine (4) to a new working point (B^{*}) or
b) to accelerate the vehicle to the maximum or
c) to increase the highest speed of the vehicle at full combustion engine power.

2. A vehicle according to claim 1, characterized in that the control unit (20) supplies energy from the energy store (22) to the electric motor (12, 16) independently of the drive signal (a,a...), in order
d) to make additional energy available for overcoming of slopes at approximately constant velocity at unaltered combustion engine revolutions and/or
e) to replace part of the combustion engine power in stationary operating states by stored energy withdrawal and/or
f) to enable driving operation with disconnected combustion engine (4).

3. A vehicle according to claim 1 or claim 2, characterized in that optimum acceleration of the combustion engine (4) to a new operating point is effected taking into consideration at least one of the following prerequisites,
- as fast as possible,
- with the most favourable gas mileage,
- with as little as possible pollutant emission,
- as quiet as possible, the prerequisites being evaluated in the case of simultaneous consideration of a plurality thereof.

4. A vehicle according to any one of claims 1 to 3, characterized in that, for optimum acceleration of the combustion engine, the generator is temporarily electrically uncoupled wholly or partially from the electric motor (12, 16) and, upon reaching the new working point (B^{*}), the combustion engine (4), together with the generator (6), is gradually recoupled to the electric motor (12, 16), and in that during the uncoupling phase energy is supplied to the electric motor (12, 16) from the energy store (22) in such a way that coupling transitions are jerk- free.

5. A vehicle according to any one of claims 1 to 4, characterized in that the drive signal is also representative of a requirement of drive operation with exclusive supply from the energy store (22), the latter being intermittently charged by connecting the combustion engine and optionally additionally, during deceleration or braking of the vehicle, by electrical power generated by the electric motor (12, 16) then operating as a generator.

6. A vehicle according to any one of claims 1 to 5, characterized in that, to achieve maximum vehicle acceleration, power is supplied to the electric motor (12, 16) from the energy store (22) in parallel with power supplied by the combustion engine/generator (2) to such an extent that the stored energy is sufficient to achieve the constant power selected by a new throttle position (a).

7. A vehicle according to any one of claims 1 to 6, characterized in that, in the last area of the throttle path, energy is withdrawn in temporally restricted manner from the energy store (22) to increase the maximum speed achievable by the combustion engine (4) alone.

8. A vehicle according to any one of claims 1 to 7, characterized by a signalling device for the state of charge of the energy store (22).

9. A vehicle according to claim 8, characterized in that the signalling device operates in tactile manner, especially as an adjustable biassed spring which increases the actuation resistance of the throttle (27).

10. A vehicle according to any one of claims 1 to 9, characterized in that a "kick-down" signal is recognized by the control unit (20) with the aid of the simultaneous presence of the maximum value of the accelerator pedal position (a) and the exceeding of a predetermined boundary value for the speed (a) or acceleration (a) of accelerator pedal actuation.

## Revendications

1. Véhicule non guidé, dans lequel au moins une roue (14,18) est couplée pour l'entraînement à un moteur électrique (12,16) qui est alimenté par l'intermédiaire d'un distributeur d'énergie (8) en courant conformément à des signaux de commande engendrés par une unité de commande (20), courant qui est fourni par un générateur (6) couplé à un moteur à combustion (4), l'unité de commande (20) recevant d'un levier de roulement (27) un signal de roulement (a,ä,ä...) qui est représentatif de la position (a) du levier de roulement, ainsi qu'au moins de la vitesse (a) et/ou de l'accélération (a), par laquelle le levier de roulement (27) est déplacé, une réserve d'énergie (22) reliée par l'intermédiaire du distributeur d'énergie (8) électriquement au moteur électrique (12,16) et au générateur (6) étant en outre prévue, et l'unité de commande (20) transformant le signal de roulement (a,ä,ä...) en un signal de commande pour le moteur à combustion (4) afin d'amener le moteur de combustion à la puissance correspondant à la position (a) du levier de roulement ou de le maintenir à cette puissance, l'unité de commande (20) engendrant en outre à partir de la vitesse (a) et/ou de l'accélération (a) de l'actionnement du levier de roulement un signal de commande pour la prise d'énergie de la réserve d'énergie (22), afin
a) de laisser accélérer le moteur à combustion (4) de façon optimale dans un nouveau point de fonctionnement (B^{*}) ou
b) d'accélérer au maximum le véhicule ou
c) d'augmenter encore la vitesse la plus élevée du véhicule pour la puissance maximale du moteur de combustion.

2. Véhicule selon la revendication 1,
caractérisé en ce que l'unité de commande (20) fournit de l'énergie de la réserve d'énergie (22) au moteur électrique (12,16) indépendamment du signal de roulement (a,a...), afin
d) de rendre disponible de l'énergie supplémentaire pour surmonter à peu près à vitesse constante des augmentations, pour une vitesse de rotation non modifiée du moteur à combustion, et/ou
e) de remplacer dans des conditions de fonctionnement stationnaires une partie de la puissance du moteur de combustion par une prise de l'énergie de la réserve et/ou
f) de rendre possible un fonctionnement de roulement pour un moteur à combustion (4) hors service.

3. Véhicule selon l'une des revendications 1 ou 2, caractérisé en ce que l'accélération optimale du moteur à combustion (4) est effectuée dans un nouveau point de fonctionnement, en tenant compte d'au moins l'une des caractéristiques suivantes, à savoir
- le plus vite possible,
- pour une consommation de carburant spécifique la plus favorable,
- pour une émission de substances nocives la plus réduite possible,
- le moins bruyamment possible, dans le cas de la prise en compte simultanée de plusieurs caractéristiques celles-ci étant pondérées.

4. Véhicule selon l'une des revendications 1 à 3, caractérisé en ce que, pour une accélération optimale du moteur à combustion (4), le générateur est temporairement découplé électriquement, de façon totale ou partielle, du moteur électrique (12,16) et le moteur à combustion (4) est de nouveau couplé peu à peu conjointement avec le générateur (6) au moteur électrique (12,16), lors de l'obtention du nouveau point de fonctionnement (B^{*}), et en ce que, lors de la phase de découplage, de l'énergie est alimentée de la réserve d'énergie (22) dans le moteur électrique (12,16) de sorte que les passages lors du couplage sont effectués sans à- coups.

5. Véhicule selon l'une des revendications 1 à 4, caractérisé en ce que le signal de roulement est en outre représentatif de l'exigence d'un fonctionnement de roulement avec une alimentation exclusive de la réserve d'énergie, cette dernière étant chargée de façon intermittente par la mise en service du moteur à combustion et le cas échéant de plus par la puissance électrique engendrée par le moteur électrique (12,16) travaillant alors, lors de la décélération ou du freinage du véhicule, comme un générateur.

6. Véhicule selon l'une des revendications 1 à 5, caractérisé en ce que, pour obtenir une accélération maximale du véhicule, de la puissance de la réserve d'énergie (22) est alimentée dans le moteur électrique (12,16), parallèlement à la puissance fournie par l'unité (2) formée du générateur et du moteur à combustion, de telle sorte que l'énergie de stockage suffit pour obtenir la puissance continue choisie par une nouvelle position (a) du levier de roulement.

7. Véhicule selon l'une des revendications 1 à 6, caractérisé en ce que, dans la dernière zone de la course du levier de roulement, de l'énergie pour augmenter la vitesse la plus élevée pouvant être obtenue par le moteur à combustion (4) seul, est prélevée, de façon limitée temporairement, de la réserve d'énergie (22).

8. Véhicule selon l'une des revendications 1 à 7, caractérisé par un dispositif de signalisation pour l'état de charge de la réserve d'énergie (22).

9. Véhicule selon la revendication 8, caractérisé en ce que le dispositif de signalisation travaille de façon tactile et est réalisé en particulier sous forme d'un ressort de précontrainte réglable qui augmente la résistance à l'actionnement du levier de roulement (27).

10. Véhicule selon l'une des revendications 1 à 9, caractérisé en ce qu'un signal "kick-down" est reconnu par l'unité de commande (20) à partir de l'existence simultanée de la valeur maximale de la position (a) de la pédale de roulement et du dépassement d'une valeur limite prédéfi- nie de la vitesse (a) ou de l'accélération (a) de l'actionnement de la pédale de roulement.
